# EUROPÄISCHE PATENTSCHRIFT

(11) **EP 0 824 717 B1**
(45) Veröffentlichungstag und Bekanntmachung des Hinweises auf die Patenterteilung: **17.10.2001**
(21) Anmeldenummer: 96907444.2
(22) Anmeldetag: 13.03.1996
(51) Int. Cl.: G03B 17/24, G11B 5/02

(54) **VERFAHREN UND VORRICHTUNG ZUM AUSLESEN VON MAGNETISCH IN EINER TRANSPARENTEN MAGNETSCHICHT GESPEICHERTEN BINÄREN INFORMATIONEN**
PROCESS AND DEVICE FOR READING OUT BINARY INFORMATION MAGNETICALLY STORED IN A TRANSPARENT MAGNETIC LAYER
PROCEDE ET DISPOSITIF DE LECTURE D'INFORMATIONS BINAIRES MEMORISEES MAGNETIQUEMENT DANS UNE COUCHE MAGNETIQUE TRANSPARENTE

(30) Priorität: 07.04.1995 DE 19513260
(43) Veröffentlichungstag der Anmeldung: 25.02.1998
(73) Patentinhaber: AGFA-GEVAERT AG, 51301 Leverkusen (DE)
(72) Erfinder: WEINERT, Volker, D-82024 Taufkirchen (DE)
(86) Internationale Anmeldenummer: EP9601058
(87) Internationale Veröffentlichungsnummer: WO9631802

(56) Entgegenhaltungen:
- EP-A- 0 441 280
- EP-A- 0 565 759
- US-A- 4 227 175
- US-A- 4 964 139
- US-A- 4 987 439
- US-A- 5 204 708

## Beschreibung

Die Erfindung betrifft ein Verfahren und eine Vorrichtung nach dem Oberbegriff des Anspruchs 1 bzw. des Anspruchs 10. Transparente Magnetschichten sind in jüngerer Zeit bekanntgeworden auf fotografischen Filmen, wo sie dazu dienen sollen, Informationen für die Belichtung und/oder Verarbeitung der fotografischen Filme nach der Entwicklung aufzunehmen und für Lesevorgänge in den Verarbeitungsgeräten bereitzuhalten. Wegen der Forderung, daß die fotografischen Filme in ihrer Bildspeicherungsfähigkeit und damit der Transparenz nicht wesentlich verändert werden dürfen, können diese Magnetschichten nur sehr wenig magnetisierbares Material enthalten. Dementsprechend schwach sind auch die Magnetfelder der aufgezeichneten Signale; sie dürften etwa um den Faktor 200 niedriger liegen als die Felder von üblichen Ton- und Signalaufzeichnungen auf ausschließlich dafür vorgesehenen, nicht transparenten Magnetbändern oder Magnetscheiben.

Zur Erfassung und Verarbeitung solcher Magnetsignale sind deshalb besondere Maßnahmen zu treffen, die einmal in der Art des Magnet-Codes bestehen, wie er z. B. in der US-Patentschrift 4,987,439 beschrieben ist und es sind für die Verarbeitung der von Magnetköpfen erzeugten schwachen Signale besondere Verstärkungs- und Auswerteeinrichtungen entwickelt worden, wie sie z. B. aus der US-Patentschrift 4,964,139 hervorgehen. Dort ist eine Schaltung mit einem einzigen Filter 18 beschrieben, um Störsignale wie das Rauschen des Vorverstärkers zu beseitigen. Es ist außerordentlich schwierig, ein solches Filter auf die durch unterschiedliche Aufzeichnungsgeschwindigkeit oder -dichte verursachten vielfältigen Störfrequenzen eines solchen Signals abzustimmen.

Aus der US 4,227,175 ist eine Vorrichtung zum Auslesen von in einer Magnetschicht abgespeicherten binären Informationen bekannt. Diese Magnetschicht ist auf einer Diskette oder einem Tonband aufgebracht. Die binären Informationen sind mit sehr großer Dichte in einer Vielzahl von nebeneinander angeordneten Spuren enthalten, die einen sehr geringen Abstand zueinander haben. Beim Auslesen der einzelnen Spuren kann es daher zu Verzerrungen kommen, wenn die von dem Magnetlesekopf erfaßten binären Informationen nicht ausschließlich einer einzigen Spur entstammen. Zur Fehlererfassung und -korrektur wird daher vorgeschlagen, das vom Magnetlesekopf gelieferte Signal mehreren parallelgeschalteten Filtern zuzuführen. Diese Filter tragen dazu bei, fälschlich vom Magnetlesekopf gelesene Bits ausfinden machen zu können. Dabei wird allerdings davon ausgegangen, daß die Magnetschicht genügend dick ist, so daß Störsignale, die z. B. durch das Rauschen eines Vorverstärkers oder durch Laufschwankungen des Mediums mit der Magnetschicht erzeugt werden, einen nur geringen Einfluß haben.

Aufgabe der Erfindung ist es deshalb, ein Verfahren und eine Vorrichtung anzugeben, die für das Auslesen von in einer transparenten Magnetschicht eines fotografischen Films abgespeicherten binären Informationen geeignet sind.

Diese Aufgabe wird gelöst durch die technischen Lehren der Ansprüche 1 bzw. 10.

Bei erfindungsgemäßer Ausbildung der Auswertevorrichtung ist es nicht mehr notwendig, das durch den Magnetkopf ausgelesene und den Vorverstärker verstärkte Signal mit einem einzigen Frequenzfilter von Störsignalen zu trennen, sondern das ausgelesene und verstärkte Signal wird einer Filterung durch eine Vielzahl von unterschiedlichen Frequenzfiltern unterworfen und die gesuchten Bits der binären Informationen werden dann aufgrund von Plausibilitätsüberlegungen und Übereinstimmungen aus den verschieden gefilterten Signalfolgen ausgewählt. Zweckmäßige Ausgestaltungen der Erfindung betreffen die Art der Filterabstufung und der Differenzierung sowie das Unterdrücken von Störsignalen sowie eine Vorrichtung zur Durchführung des Verfahrens.

Einzelheiten eines Ausführungsbeispiels der Erfindung sind anhand von Figuren eingehend beschrieben.

Es zeigen:
- Fig. 1: ein Gesamtschema des Aufbaus der Schaltung zur Signalverstärkung und Auswertung,
- Fig. 2: die Durchlaßcharakteristik der angewendeten Frequenzfilter,
- Fig. 3: die Anordnung zur Zeitverzögerung der gefilterten Signale,
- Fig. 4: das Prinzip der Differenzbildung zwischen ursprünglichem und verzögertem Signal,
- Fig. 5: Beispiele für den Verlauf unterschiedlich gefilterter und differenzierter Signale sowie zur Prüfung festgestellter Extremwerte und deren Digitalisierung zu Bits,
- Fig. 6: Beispiele für die Bewertung der Bitwerte zu Bitlängen bei den gefilterten und differenzierten Signalen gemäß Fig. 5.

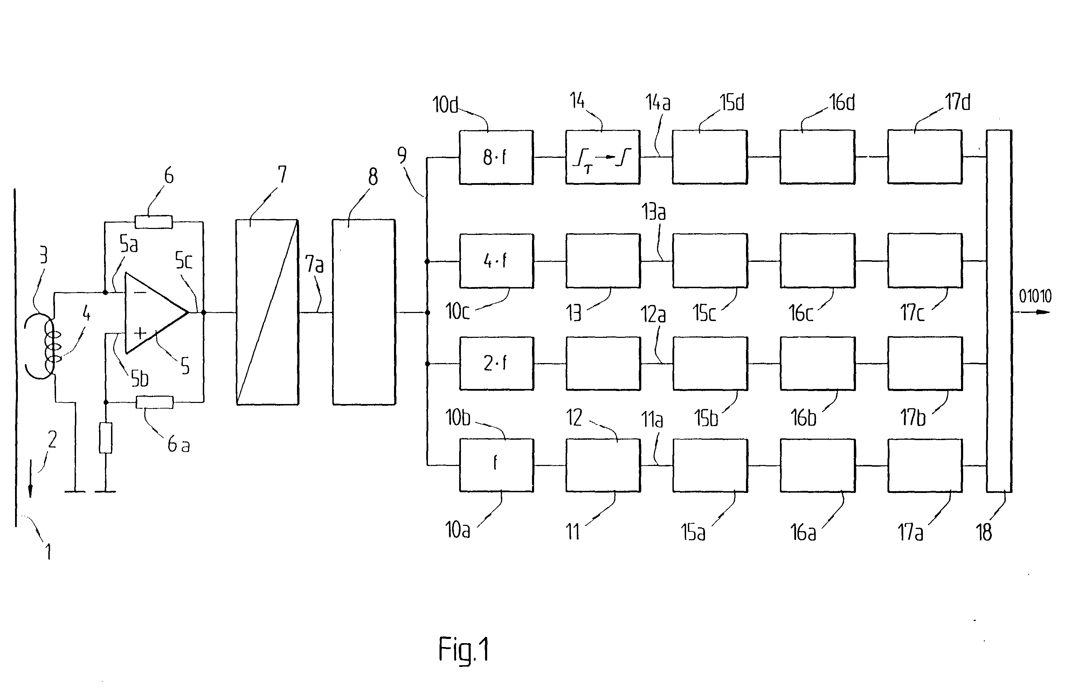

In Fig. 1 ist mit 1 ein fotografisches Filmband mit einer sehr dünnen Magnetschicht bezeichnet, das an einem Magnetlesekopf 3 mit einer Wicklung 4 in Richtung des Pfeiles 2 in einem Filmverarbeitungsgerät, z. B. einem Kopiergerät, vorbeigeführt wird. Die einseitig an Masse liegende Wicklung 4 ist mit ihrem anderen Ende mit dem negativen Eingang 5a eines Operationsverstärkers 5 verbunden. Dessen Ausgang 5c ist mit dem Eingang 5a über einen Rückkopplungswiderstand 6 verbunden, der einen sehr hohen Widerstand von einigen zehn MΩ aufweist. Der Operationsverstärker 5 hat eine sehr hohe Leerlaufverstärkung Aₒ von mehr als 10⁶ und ein geringes Eigenrauschen. Der positive Eingang 5b des Verstärkers 5 ist über ein Widerstandsnetzwerk, enthaltend einen Widerstand 6a mitgekoppelt, so daß eine weitgehende Kompensation des Innenwiderstandes der Magnetkopfwicklung 4 ermöglicht wird. Bei einem solchen Verhältnis von Rückkopplungswiderstand 6, Leerlaufverstärkung Aₒ von mehr als 10⁶ und einer möglichst niederohmigen Magnetkopfwicklung 4 kann der Magnetkopf praktisch im Kurzschluß betrieben werden.

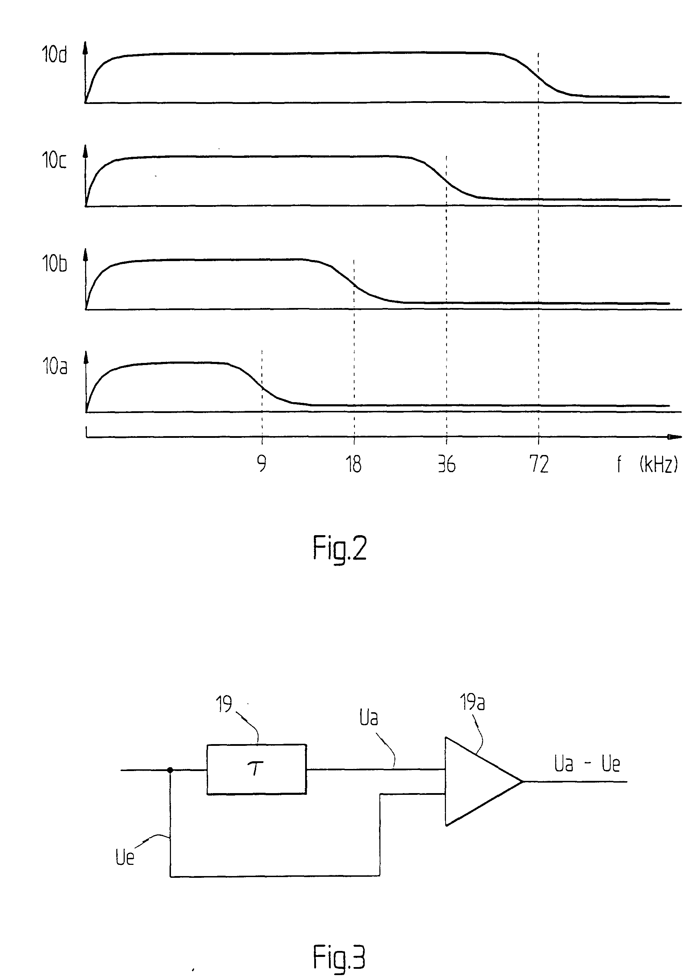

Der Ausgang 5c des Vorverstärkers 5 ist verbunden mit einem Analog-Digitalkonverter 7, der das analog verstärkte Magnetkopfsignal mit einer ausreichend hohen Abtastfrequenz digitalisiert, die sehr stark von dem Frequenzverlauf und der Relativgeschwindigkeit zwischen Film 1 und Magnetkopf 3 abhängt. Zum Beispiel ist bei einer Transportgeschwindigkeit des Films am Magnetkopf von 30 cm/sek. eine Digitalisierungsfrequenz von mindestens 250 kHz erforderlich. Dies entspricht einer Taktzeit von 4 µs. Bei einer geringeren Transportgeschwindigkeit des Films kann auch die Abtastfrequenz des Analog-Digitalwandlers entsprechend verringert werden. Das digitale Ausgangssignal in der Leitung 7a wird einem Datenpuffer 8 für asynchrone Verarbeitung zugeführt. Dessen Ausgang ist über eine Leitung 9 verbunden mit 4 parallel angeordneten Verarbeitungskanälen, an deren Anfang jeweils ein Frequenzfilter 10a, 10b, 10c und 10d angeordnet ist. Deren Durchlaßcharakteristik ist in Fig. 2 dargestellt. Daraus ist ersichtlich, daß diese Frequenzfilter Tiefpaßfilter sind, die für über der Grenzfrequenz liegende Frequenzanteile des Signals praktisch undurchlässig sind. Tiefer liegende Frequenzanteile werden mit einem gewissen Übergangsbereich zumindest nahe der Grenzfrequenz fast in voller Stärke durchgelassen.

In den vier in Fig. 2 übereinander angeordneten Diagrammen, deren Abszissen im logarithmischen Maßstab aufgezeichnet sind, ist für jedes der Filter 10a - 10d eine eigene Durchlässigkeitskurve dargestellt, die von einer Anfangsfrequenz auf die maximale Durchlässigkeit ansteigt und jeweils bei der Grenzfrequenz rasch auf fast 0 absinkt. Die Grenzfrequenzen der Filter 10a bis 10d unterscheiden sich jeweils um einen konstanten Faktor, der ganzzahlig, insbesondere 2 ist. Das heißt, die Grenzfrequenz des Filters 10a liegt bei einem ausgeführten Beispiel bei 9 kHz, die des Filters 10b bei 18 kHz, die des Filters 10c bei 36kHz und die des Filters 10d bei 72 kHz. Diese Grenzfrequenzen müssen deutlich unter der Abtastfrequenz des Analog-Digitalwandlers 7 liegen; insbesondere ist die höchste Filtergrenzfrequenz von etwa 72 kHz um den Faktor 3 niedriger als die Abtastfrequenz von 250 kHz.

Natürlich könnte auch noch eine größere Anzahl von Filterkanälen gebildet werden, jedoch dürfte das beschriebene Ausführungsbeispiel mit Grenzfrequenzen zwischen 9 und 72 kHz eine deutliche Unterscheidung in den Frequenzinhalten der Ausgangssignale ergeben. Im Vergleich der unterschiedlich gefilterten Signale überwiegt sogar jeweils der Anteil an Frequenzen, der in dem nächst tieferliegenden Signal ausgefiltert wurde.

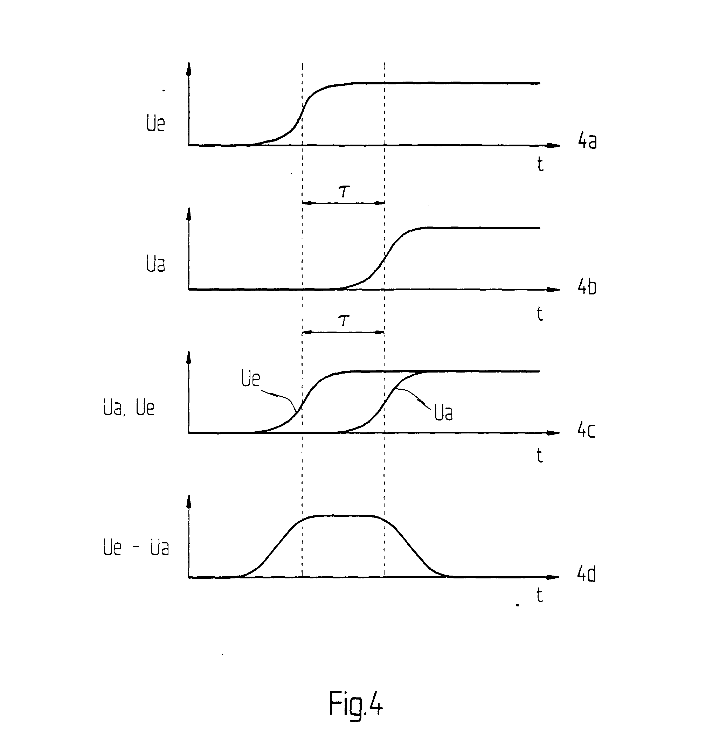

Gemäß Fig. 1 werden die verstärkten und frequenzgefilterten Signale jeweils weitergeleitet an eine Differenziereinrichtung 11 bis 14. Üblicherweise wird in der Signalverarbeitung eine Differenzierung realisiert durch Einschaltung eines Kondensators. Diese Art der Differenzierung hat jedoch bei stark verrauschten Signalen erhebliche Nachteile. Die Differenzierung über einen Kondensator bringt eine Verstärkung des hochfrequenten Rauschens, was im vorliegenden Fall besonders unerwünscht ist. Die Erzeugung eines Gradientensignals aus dem verstärkten und gefilterten Signal erfolgt deshalb in der in den Fig. 3 und 4 beschriebenen Art und Weise. Gemäß Fig. 3 wird in den Weg des Ausgangssignals Uₑ ein Verzögerungsglied 19 eingeschaltet, das ein um den Betrag τ verzögertes Signal Uₐ erzeugt. Die Größe der Zeitverzögerung τ muß dabei unter Berücksichtigung des Zeitbedarfs für den Anstieg des Signals von einem Minimum zu einem Maximum festgelegt werden, damit bei einer Differenzbildung in der Differenzbildungseinrichtung 19a ein möglichst großer Anteil dieser Signalveränderung in einem möglichst kurzen Zeitraum verwertet werden kann. Experimentelle Untersuchungen haben gezeigt, daß diese Voraussetzung am besten erfüllt wird, wenn der Zeitverzug τ in Abhängigkeit von der Wellenlänge der zugehörigen Filtergrenzfrequenz gewählt wird, insbesondere etwa das Doppelte der Schwingungsdauer der zugehörigen Grenzfrequenz ausmacht.

In Fig. 4 ist zunächst in 4a ein Anstieg des gefilterten Signals Uₑ dargestellt, in Fig. 4b das um den Betrag τ zeitverzögerte Signal Uₐ. In Fig. 4c sind diese beiden Signale Uₐ und Uₑ in einer Figur dargestellt und die Fig. 4d schließlich zeigt die Differenz Uₑ - Uₐ. Dieses Differenzsignal gibt die Größe der Signalveränderung in dem Bereich τ an, also ein rauscharm erzeugtes Differenzsignal, das die jeweils gemittelten Steigungswerte des gefilterten Signals darstellt.

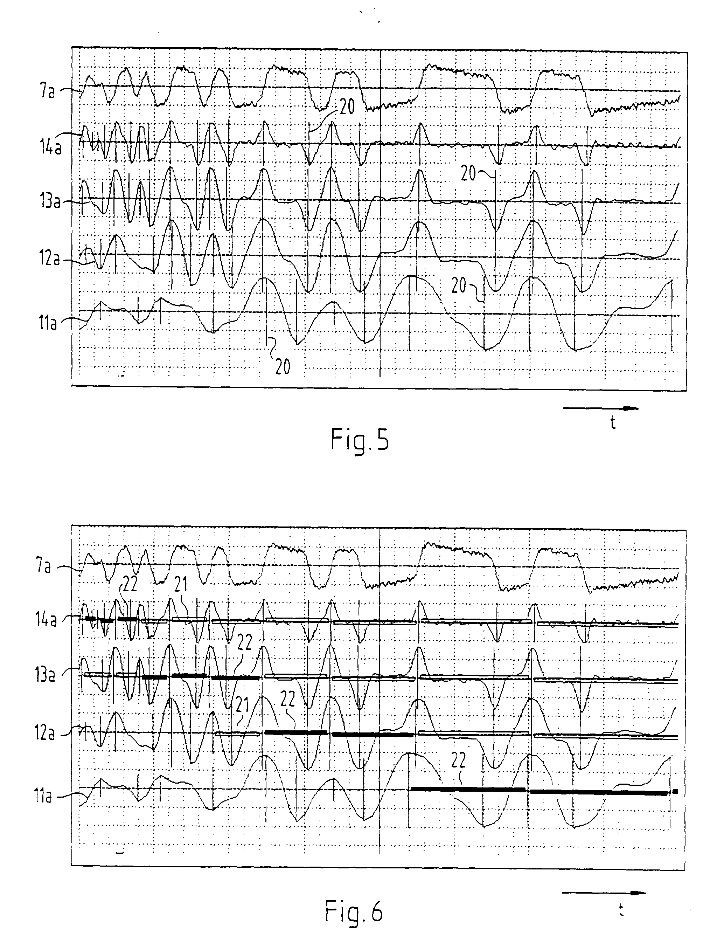

In Fig. 5 sind als Beispiel original aufgezeichnete Signale am Ausgang des Analog-Digitalkonverters 7a den gefilterten und differenzierten Signalen der verschiedenen Kanäle am Ausgang der Differenzbildungseinrichtungen 11a, 12a, 13a und 14a gegenübergestellt. Bemerkenswert ist dabei, daß über die gesamte Länge des Diagramms die Aufzeichnungsgeschwindigkeit ansteigt oder die Abtastgeschwindigkeit etwa abfällt und somit der Abstand der positiven Maxima sowohl der Kurve 7a als auch der Kurven 14a - 11a sich vergrößert. Das kann z. B. durch den Anlauf des Filmtransports und der Signalaufzeichnungseinrichtung einer batteriebetriebenen Kamera hervorgerufen werden. Die niedrigere Relativgeschwindigkeit führte auch zu einem verstärkten Rauschen in der Kurve 14a. Der Rauschanteil ist hier besonders hoch, weil der zeitlich verzögerte Rauschanteil des Signals deutlich unter die Grenzfrequenz von 72 kHz absinkt. Durch die tieferliegenden Grenzfrequenzen der Filter in den Kanälen 11- 13 kann dieser Rauschanteil jedoch großenteils entfernt werden; insbesondere in der Kurve 12a ist er ersichtlich nicht mehr störend. Dagegen werden durch die noch tieferliegende Grenzfrequenz des Filters 11 bereits Extremwerte bis unter die Nullinie gedrückt, so daß sie der späteren Auswertung entzogen werden.

Bevor jedoch die unterschiedlich gefilterten und differenzierten Signale der Kanäle 11- 14 verglichen und die plausibelsten Signale zu Bitmustern ausgewertet werden, wird in einer weiteren Stufe 15a, 15b, 15c und 15d ein Ausscheidungsprozeß durchgeführt für Signale, die aufgrund ihrer Lage und/oder Größe nicht zu einem Bitmuster gehören können. Dazu wird zunächst in jedem der Schaltkreise 15a -15d festgelegt, welche Schwingungsdauer eine akzeptable Bitlänge haben kann. Dies hängt natürlich von der dominierenden Frequenz des Signals nach dem Filtervorgang und der Differenzierung ab. Experimentelle Untersuchungen haben ergeben, daß ein Extremwert dann als Teil eines Bitmusters akzeptabel oder plausibel ist, wenn die einer Grundwellenlänge entsprechende erkannte Bitlänge, nämlich der Abstand zweier gleichartiger positiver Extremwerte mit dazwischenliegendem Extremwert entgegengesetzten Vorzeichens zwischen der einfachen und der doppelten Schwingungsdauer liegt, die der jeweiligen Filtergrenzfrequenz entspricht. Wenn z. B. die Grenzfrequenz des Filters 10d 72 kHz beträgt, was einer Schwingungsdauer von etwa 14 µs entspricht, so wird als Bitlänge akzeptiert, wenn der Abstand zweier positiver Extremwerte zwischen 14 und 30 µs liegt. Als zusätzliche Kriterien für das Ausscheiden nicht eindeutig identifizierbarer Bitmuster kann z. B. herangezogen werden, daß der Zeitabstand zwischen zwei unterschiedlich gerichteten Extremwerten im Verhältnis zu dem mutmaßlichen Bitabstand zu gering ist oder daß die Amplitude zweier aufeinanderfolgender unterschiedlich gerichteter Extrema zu klein ist im Vergleich zu den vorangegangenen Extremwertdifferenzen.

Die aufgrund dieser Überprüfungen von einem nachgeschalteten Scheitelwertdetektor 16a - d gefundenen Scheitelwerte oder als Extremwerte anerkannten Signale sind in Fig. 5 durch senkrechte Striche 20 dargestellt. Elektronisch wird dies durch die Digitalisierer 17a - d realisiert. Bei dieser Zeichnung ist auch berücksichtigt, daß aufeinanderfolgende Extremwerte nur dann als Teil eines Bitmusters anerkannt werden können, wenn sie wechselndes Vorzeichen haben.

Gemäß Fig. 6 sind nun zu den differenzierten Kurven 11a - 14a gemäß Fig. 5 die Auswertungen dargestellt mit liegenden Balken, jeweils zwischen zwei gleichgerichteten positiven Extremwerten, die den Plausibilitätsanforderungen des Störsignalkorrektors 15 entsprochen haben.

Durch Vergleich der verschiedenen Filtersignalkurven 11a, 12a, 13a, 14a, bzw. der dort gefundenen Balken für die wahrscheinlichen Bitlängen 21 wird dann entschieden, welcher der Balken 21 in diesem Zeitbereich bzw. Signalbereich am sichersten als Bitmuster anerkannt werden kann und dann als schwarzer Balken 22 zu kennzeichnen ist. Prinzipiell können für diese Auswahl bereits in der Stufe 15 angewendete Kriterien verwendet werden, wobei geprüft wird, welche der wahrscheinlichen Bitlängen aus den verschiedenen Kanälen das Kriterium am besten erfüllt. Auch andere Kriterien können in der Weise angewendet werden, daß entweder mit für jeden Kanal individuell festgelegten Grenzwerten verglichen wird oder zeitlich etwa gleichliegende Bitlängen untereinander verglichen werden. Im einzelnen haben sich folgende Kriterien einzeln oder kombiniert angewendet als zutreffend erwiesen.:
- die Bitlängen 21 in verschiedenen Kanälen stimmen in Zeitlage und Länge überein;
- die Bitlängen liegen zwischen ganzer und doppelter Wellenlänge der zugehörigen Filtergrenzfrequzenz.
- die Abfrage der möglichen Bitlängen erfolgt von der höheren Filtergrenzfrequenz zu den niedrigeren hin, bis erstmals eine Bitlänge im zulässigen Bereich gefunden wird.

In den so als gesichert erkannten Bitmustem wird dann aufgrund der Lage des zwischen den beiden gleichgerichteten Extremwerten liegenden andersgerichteten Bits entschieden, ob das Bit eine 0 oder eine 1 darstellt.

Anstelle der Tiefpaßfilter 10a - 10d können auch schmalbandigere Filter verwendet werden, die auch den unteren Frequenzbereich abschneiden. Dieser Effekt der stärkeren Betonung der hochfrequenteren Signalanteile wird auch durch die Art der Differenzbildung gemäß Fig. 3 und 4 unterstützt.

Die Funktionen der Baugruppen 10 - 18 von Fig. 1 können aber auch durch einen einzigen entsprechend programmierten Mikroprozessor, oder einen digitalen Signalprozessor ausgeführt werden.

Die Filterung des vorverstärkten Signals mit verschiedenen Filterfrequenzbereichen kann auch zeitlich nacheinander durchgeführt werden, wenn ein entsprechender Speicher für das vorverstärkte Signal vorgesehen wird, aus dem es jeweils für einen Filterlauf wieder entnommen wird.

Die beschriebene Vorverstärkung der Magnetlesekopfsignale mittels Kurzschlußbetrieb ermöglicht die besonders vorteilhafte Differenzbildung nach der Frequenzfilterung.

## Patentansprüche

1. Verfahren zum Auslesen von magnetisch in einer transparenten Magnetschicht eines fotografischen Films (1) gespeicherten binären Informationen, wobei ein von einem an die Magnetschicht angedrückten Magnetlesekopf (3) geliefertes Signal vorverstärkt, frequenzgefiltert und ausgewertet wird, **dadurch gekennzeichnet, daß** das Verfahren folgende Verfahrensschritte aufweist:
Filtern des vorverstärkten Signals mit unterschiedlichen Filterfrequenzbereichen und anschließendes Differenzieren, wodurch mehrere Filtersignalkurven (11a, 12a, 13a, 14a) erzeugt werden, die Abbilder der binären Informationen enthalten,
Bestimmen der Positionen und Ausrichtungen von Extremwerten (20) der jeweiligen Filtersignalkurven (11a, 12a, 13a, 14a) und
Auswählen zweier aufeinanderfolgender Extremwerte gleicher Ausrichtung einer der Filtersignalkurven (11a, 12a, 13a, 14a) für ein Erfassen eines der bits der abgespeicherten binären Informationen,
wobei die zwei Extremwerte in Abhängigkeit von ihren bestimmten Positionen und dem Filterfrequenzbereich ihrer Filtersignalkurve (11a, 12a, 13a, 14a) ausgewählt werden.

2. Verfahren nach Anspruch 1, **dadurch gekennzeichnet, daß** die vorverstärkten Signale vor der Filterung digitalisiert werden mit einer Abtastfrequenz, die ein Vielfaches der höchsten Filterfrequenz, insbesondere etwa das Dreifache der höchsten Filterfrequenz beträgt.

3. Verfahren nach Anspruch 1 oder 2, **dadurch gekennzeichnet, daß** als Frequenzfilter Tiefpaßfilter (10a - 10d) unterschiedlicher Grenzfrequenzen verwendet werden.

4. Verfahren nach einem der Ansprüche 1 bis 3, **dadurch gekennzeichnet, daß** die Filterung mit den Frequenzfiltern (10a - 10d) verschiedener Grenzfrequenz zeitlich parallel ausgeführt wird.

5. Verfahren nach Anspruch 3 oder 4, **dadurch gekennzeichnet, daß** die Filtergrenzfrequenzen um einen konstanten, insbesondere ganzzahligen Faktor, insbesondere den Faktor 2 verschieden gewählt werden.

6. Verfahren nach einem der vorangehenden Ansprüche, **dadurch gekennzeichnet, daß** die Differenzierung durch eine Signalverzögerung der Filterausgangssignale um einen Zeitbetrag τ und die Bildung einer Differenz zwischen dem ursprünglichen Filterausgangssignal und dem verzögerten Signal erfolgt.

7. Verfahren nach Anspruch 5, **dadurch gekennzeichnet, daß** der Betrag τ der Signalverzögerung für jede Filtersignalkurve anders festgelegt wird und zwar bei steigender Filtergrenzfrequenz mit fallender Verzögerungszeit.

8. Verfahren nach Anspruch 7, **dadurch gekennzeichnet, daß** die Verzögerungszeit τ für die jeweilige Filtersignalkurve etwa doppelt so groß ist wie die Schwingungsdauer der zugehörigen Filtergrenzfrequenz.

9. Verfahren nach einem der Ansprüche 1 bis 8, **dadurch gekennzeichnet, daß** der Abstand (21) zweier benachbarter Extremwerte gleicher Ausrichtung bestimmt wird und das Auswählen der Extremwerte in Abhängigkeit von diesem Abstand (21) erfolgt.

10. Vorrichtung zur Erkennung binärer Informationen in einem Signal eines Magnetlesekopfes (3), der im Betrieb an eine transparente Magnetschicht eines fotografischen Filmes angedrückt und relativ dazu bewegt wird, wobei ein Mittel (10a, 10b, 10c, 10d) zur Frequenzfilterung des Signals vorhanden ist, **dadurch gekennzeichnet, daß** mehrere Auswertkanäle mit unterschiedlichen Frequenzfiltern (10a, 10b, 10c, 10d) vorgesehen sind, denen jeweils eine Differenziereinrichtung (11, 12, 13, 14), ein Extremwertdetektor (16a, 16b, 16c, 16d) und eine gemeinsame Auswahleinrichtung (18) nachgeschaltet sind.

11. Vorrichtung nach Anspruch 10, **dadurch gekennzeichnet, daß** vier parallele Auswertkanäle vorgesehen sind, deren Filter (10a - 10d) als Tiefpaßfilter mit um einen konstanten Faktor unterschiedlichen Grenzfrequenzen ausgebildet sind.

12. Vorrichtung nach Anspruch 11, **dadurch gekennzeichnet, daß** der konstante Faktor der Tiefpaßfiltergrenzfrequenzen ganzzahlig, insbesondere 2 ist.

13. Vorrichtung nach einem der Ansprüche 10 bis 12, **dadurch gekennzeichnet, daß** sie ein Digitalisierungsmittel (7) zum Digitalisieren des Signals aufweist und für die Filterung der digitalisierten Signale, für die Differenzbildung, für das Ausscheiden der Störsignale und für die Extremwertdetektion ein Digitalrechner, insbesondere ein entsprechend programmierter Mikroprozessor oder digitaler Signalprozessor vorgesehen ist, der so ausgestaltet ist, daß er Bitlängen (21) von Bits aus den verschiedenen Auswertkanälen bestimmt und eines dieser Bits aus den verschiedenen Auswertkanälen in Abhängigkeit von seiner Bitlänge (21) und dem Frequenzfilter (10a - 10d) seines Auswertkanals als richtiges Bit (22) der zu erkennenden binären Informationen auswählt.

14. Vorrichtung nach Anspruch 13, **dadurch gekennzeichnet, daß** als Auswahlkriterium die Übereinstimmung von Bitlängen (21 ) von Bits verschiedener Auswertkanäle nach Lage und/oder Länge herangezogen wird.

15. Vorrichtung nach Anspruch 13 oder 14, **dadurch gekennzeichnet, daß** als Auswahlkriterium die Übereinstimmung der Bitlänge (21) eines Bits aus einem der Auswertkanäle mit der Bitlänge (21) des letzten als gültig bewerteten Bits (22) herangezogen wird.

## Claims

1. Method for reading out items of binary information magnetically stored in a transparent magnetic layer of a photographic film (1), wherein a signal supplied by a magnetic reading head (3) pressed against the magnetic layer is preamplified, frequency-filtered and evaluated, **characterized in that** the method comprises the following method steps:
filtering the preamplified signal with different filter frequency ranges and subsequent differentiation, as a result of which several filter signal curves (11a, 12a, 13a, 14a) are generated that contain images of the items of binary information,
determination of the positions and orientations of extreme values (20) of the respective filter signal curves (11a, 12a, 13a, 14a) and
selection of two consecutive extreme values having the same orientation from the filter curves (11a, 12a, 13a, 14a) to determine one of the bits of the stored items of binary information,
wherein the two extreme values are selected as a function of their particular positions and the filter frequency range of their filter signal curve (11a, 12a, 13a, 14a).

2. Method according to Claim 1, **characterized in that** the preamplified signals are digitized prior to filtering with a sampling frequency that is a multiple of the highest filter frequency, in particular about three times the highest filter frequency.

3. Method according to Claim 1 or 2, **characterized in that** low-pass filters (10a-10d) having different cutoff frequencies are used as frequency filters.

4. Method according to one of Claims 1 to 3, **characterized in that** the filtering is performed temporally in parallel with the frequency filters (10a - 10d) having different cutoff frequency.

5. Method according to Claim 3 or 4, **characterized in that** the filter cutoff frequencies are chosen to differ by a constant, in particular integral factor, in particular the factor 2.

6. Method according to one of the preceding claims, **characterized in that** the differentiation takes place as a result of a signal delay of the filter output signal by a time value τ and the formation of a difference between the original filter output signal and the delayed signal.

7. Method according to Claim 5, **characterized in that** the value τ of the signal delay is specified differently for every filter signal curve and, specifically, for rising filter cutoff frequency with decreasing delay time.

8. Method according to Claim 7, **characterized in that** the delay time τ is twice as large for the respective filter signal curve as the oscillation period of the associated filter cutoff frequency.

9. Method according to one of Claims 1 to 8,
**characterized in that** the spacing (21) between two adjacent extreme values having the same orientation is determined and the extreme values are selected as a function of said spacing (21).

10. Device for detecting items of binary information in a signal of a magnetic reading head (3) that is pressed during operation against a transparent magnetic layer of a photographic film and moved relative thereto, wherein a means (10a, 10b, 10c, 10d) is present for frequency filtering the signal, **characterized in that** a plurality of evaluation channels having different frequency filters (10a, 10b, 10c, 10d) are provided, downstream of each of which a differentiating device (11, 12, 13, 14) an extreme value detector (16a, 16b, 16c, 16d) and a common selection device (18) are connected.

11. Device according to Claim 10, **characterized in that** four parallel evaluation channels are provided whose filters (10a - 10d) are constructed as low-pass filters with cutoff frequencies differing by a constant factor.

12. Device according to Claim 11, **characterized in that** the constant factor of the low-pass filter cutoff frequencies is an integer, in particular two.

13. Device according to one of Claims 10 to 12, **characterized in that** it comprises a digitizing means (7) for digitizing the signal and a digital computer, in particular a suitably programmed microprocessor or digital signal processor is provided for filtering the digitised signals, for differentiation, for removing interfering signals and for the extreme value detection, which digital computer is designed in such a way that it determines bit lengths (21) of bits from the various evaluation channels and selects one of said bits from the various evaluation channels as a function of its bit length (21) and the frequency filter (10a - 10d) of its evaluation channel as correct bit (22) of the items of binary information to be recognized.

14. Device according to Claim 13, **characterized in that** the coincidence of bit lengths (21) of bits of various evaluation channels according to position and/or length is used as selection criterion.

15. Device according to Claim 13 or 14, **characterized in that** the coincidence of the bit length (21) of a bit from one of the evaluation channels with the bit length (21) of the last bit (22) assessed as valid is used as selection criterion.

## Revendications

1. Procédé pour lire des informations binaires mémorisées de façon magnétique dans une couche magnétique transparente d'un film photographique (1), un signal fourni par une tête de lecture magnétique (3) appuyée sur la couche magnétique étant préamplifié, filtré en fréquence et évalué, **caractérisé en ce que** le procédé comporte les étapes suivantes :
filtrer le signal préamplifié avec différentes plages fréquentielles de filtrage puis différencier, ce qui produit plusieurs courbes de signal filtré (11a, 12a, 13a, 14a) qui contiennent des images des informations binaires,
déterminer les positions et les orientations de valeurs extrêmes (20) des courbes de signal filtré respectives (11a, 12a, 13a, 14a) et
sélectionner deux valeurs extrêmes consécutives de même orientation d'une des courbes de signal filtré (11a, 12a, 13a, 14a) pour une détection d'un des bits des informations binaires mémorisées,
les deux valeurs extrêmes étant sélectionnées en fonction de leurs positions déterminées et de la plage fréquentielle de filtrage de leur courbe de signal filtré (11a, 12a, 13a, 14a).

2. Procédé selon la revendication 1, **caractérisé en ce qu'**on numérise les signaux préamplifiés avant le filtrage avec une fréquence d'échantillonnage qui est un multiple de la plus grande fréquence de filtre, notamment environ le triple de la plus grande fréquence de filtre.

3. Procédé selon la revendication 1 ou 2, **caractérisé en ce qu'**on utilise comme filtres de fréquences des filtres passe-bas (10a à 10d) de différentes fréquences de coupure.

4. Procédé selon l'une des revendications 1 à 3, **caractérisé en ce qu'**on effectue en parallèle dans le temps le filtrage avec les filtres de fréquences (10a à 10d) de différentes fréquences de coupure.

5. Procédé selon la revendication 3 ou 4, **caractérisé en ce qu'**on choisit les fréquences de coupure de filtres différentes les unes des autres d'un facteur constant, notamment entier, notamment du facteur 2.

6. Procédé selon l'une des revendications précédentes, **caractérisé en ce que** la différenciation s'effectue par un retard des signaux de sortie de filtres d'une valeur de temps τ et **en ce que** la formation d'une différence entre le signal de sortie de filtre initial et le signal retardé s'effectue.

7. Procédé selon la revendication 5, **caractérisé en ce que** la valeur τ du retard de signal est fixée différemment pour chaque courbe de signal filtré, et ce avec un retard diminuant pour une fréquence de coupure de filtre augmentant.

8. Procédé selon la revendication 7, **caractérisé en ce que** le retard τ pour la courbe de signal filtré respective est environ deux fois plus grand que la durée d'oscillation de la fréquence de coupure de filtre associée.

9. Procédé selon l'une des revendications 1 à 8, **caractérisé en ce qu'**on détermine la distance (21) entre deux valeurs extrêmes voisines de même orientation et **en ce qu'**on effectue la sélection des valeurs extrêmes en fonction de cette distance (21).

10. Dispositif pour la détection d'informations binaires dans un signal d'une tête de lecture magnétique (3) qui est appuyée lors du fonctionnement sur une couche magnétique transparente d'un film photographique et qui est déplacée par rapport à celui-ci, un moyen (10a, 10b, 10c, 10d) étant présent pour le filtrage en fréquence du signal, **caractérisé en ce qu'**il est prévu plusieurs canaux d'évaluation avec différents filtres de fréquences (10a, 10b, 10c, 10d) en aval desquels il est branché à chaque fois un dispositif différenciateur (11, 12, 13, 14), un détecteur de valeur extrême (16a, 16b, 16c, 16d) et un dispositif de sélection commun (18).

11. Dispositif selon la revendication 10, **caractérisé en ce qu'**il est prévu quatre canaux d'évaluation parallèles dont les filtres (10a à 10d) sont conçus commé des filtres passe-bas avec des fréquences de coupure différentes les unes des autres d'un facteur constant.

12. Dispositif selon la revendication 11, **caractérisé en ce que** le facteur constant des fréquences de coupure de filtres passe-bas est entier et est notamment égal à 2.

13. Dispositif selon l'une des revendications 10 à 12, **caractérisé en ce qu'**il comporte un moyen de numérisation (7) pour numériser le signal et **en ce qu'**il est prévu, pour le filtrage des signaux numérisés, pour la formation de différence, pour l'élimination des signaux parasites et pour la détection de valeur extrême, un calculateur numérique, notamment un microprocesseur ou processeur de signal numérique programmé en conséquence, qui est conçu de telle sorte qu'il détermine des longueurs (21) de bits des différents canaux d'évaluation et qu'il sélectionne comme bit correct (22) des informations binaires à détecter l'un de ces bits des différents canaux d'évaluation en fonction de sa longueur de bit (21) et en fonction du filtre de fréquences (10a à 10d) de son canal d'évaluation.

14. Dispositif selon la revendication 13, **caractérisé en ce qu'**on exploite comme critère de sélection la coïncidence de longueurs (21) de bits de différents canaux d'évaluation quant à leur position et/ou à leur longueur.

15. Dispositif selon la revendication 13 ou 14, **caractérisé en ce qu'**on exploite comme critère de sélection la coïncidence de la longueur (21) d'un bit d'un des canaux d'évaluation avec la longueur (21) du dernier bit considéré comme valide (22).
